# EUROPEAN PATENT APPLICATION

(11) **EP 2 870 852 A1**
(43) Date of publication of application: **13.05.2015**
(21) Application number: 13192299.9
(22) Date of filing: 11.11.2013
(51) Int. Cl.: A01D 34/00, G05D 1/00

(54) **Lawn mower with network communication**

(71) Applicant: Honda Research Institute Europe GmbH, 63073 Offenbach/Main (DE)
(72) Inventor: Einecke, Nils, 63073 Offenbach (DE); Franzius, Mathias, 63073 Offenbach (DE); Heckmann, Martin, 63073 Offenbach (DE)
(74) Representative: Rupp, Christian

(57) **Abstract**

A system for supporting a communication between network entities, comprising a home network (2), an autonomous robot (1), such as an autonomous lawn mower, and a user terminal (10), wherein the autonomous robot (1) and the user terminal (10) are both adapted to connect to the home network (2) via a respective preferably at least partially wireless link (1a, 10a), and to exchange information with each other over the home network (2) via said respective link (1a, 10a).

## Description

The present invention relates to a system and method related to an autonomous robot like an autonomous mower, e.g. lawn mower, and for adapting its communication possibilities and interfaces. In particular the present invention relates to a lawn mower and a system for supporting communication between network entities, in particular the lawn mower. The present invention further relates to a method for communicating and a method for establishing such a communication.

Autonomous or robotic mowers, e.g. lawn mowers, are an increasing market. Such mowers typically mow a lawn autonomously in a random brute-force fashion cutting only small pieces of grass in every run. Small grass pieces fall into the sod, thereby fertilizing the lawn. This principle is called mulching.

The term "autonomous mower" is well known to those skilled in the art and refers to an unmanned mower which has an autonomous drive unit in order to move the mower ("self-driving mower"), an onboard energy reservoir to power the drive unit, one sensor and a computing unit functionally connected to the sensor(s) and the drive unit. The lawn mower also comprises one or more blades for cutting grass and a corresponding control unit for controlling the blades.

In many approaches of autonomous lawn mowers the mowing area is delimited by an electric border wire, which emits a weak electromagnetic field. This field is used by the autonomous mower to stay within the allowed mowing area, and to find a docking or base station for recharging. For avoiding static or dynamic obstacles that are not indicated by the border wire, some commercially available autonomous mowers use bump and sonar sensors.

WO 2010/077198 A1 describes an autonomous robotic lawn mower and a method for establishing a wireless communication link between the lawn mower and a user. A border-wire-based robotic mower is disclosed and is able to communicate with a mobile terminal of the user via one or more radio based stations of a cellular network structure. The cellular network can be used to send different types of messages between the robotic lawn mower and the mobile terminal of the user, such as information messages about the battery load of the lawn mower. As a response to such an information message, the user may send an acknowledgement message over the network. The communication between lawn mower and user is thereby limited to cellular-based communication.

US 2010/0324731 A1 describes a method for establishing a desired area of confinement for an autonomous robot and autonomous robot implementing a control system for executing the same. An interaction between a user and the lawn mower via a smart phone or a similar device is disclosed. First, a map generated means of perimeter information can be displayed on the smart phone. Second, the lawn mower may be remotely controlled via the smart phone. Third, the docking station designed for use with the lawn mower acts as a communication gateway between the lawn mower and the smart phone. Thereby, the communication between the lawn mower and the smart phone is not established by means of the home network of the user.

US 6,611,738 B2 describes a mobile device including a module for performing robotic mowing. The lawn mower is capable of detecting a position via GPS signals, generating a map from these signals and using the map to keep the mower within a defined region. The lawn mower is adapted to park at a fixed docking station, and also to communicate with a user via a wireless link that interfaces with the Internet. A message like an email can be sent from the lawn mower to the user, wherein said message comprises a printout of a map or a status report. Thereby, the lawn mower can send information to the docking station via respective wireless transceivers, the docking station having a wired connection to the Internet. Additionally, the lawn mower can be controlled by the user over the Internet. The communication is based on public utilities like the Internet, but does not make use of private utilities like the home network of the user.

Cellular mobile phone networks are present in many regions. However the quality of a communication link established between two user terminals is not the same for different mobile phone networks and even for different areas within a network. It may be the case that in areas with a relative low density of user terminals, the number of base stations of the cellular mobile phone networks may be reduced with respect to other areas with a higher density. Due to the reduced number of base stations, the distance between a user terminal and a base station may increase in such a way that the network connection is rather slow and has a poor quality. On the other hand, the connection may also be slow in case too many user terminals shall be deserved by a single base station.

A further problem encountered by known communication systems comprising an autonomous lawn mower and a typical user terminal like a smart phone lies in the fact that such a smart phone typically can connect to only one wireless local area network (wireless LAN) and, as soon as such a wireless LAN connection is established, the mobile network interface or connection of the smart phone will be automatically switched off. Therefore, if the lawn mower provides the wireless LAN and the smart phone connects to the lawn mower wireless LAN, the smart phone will have e.g. no Internet connection anymore.

In view of the above-mentioned disadvantages of known autonomous mowers, the present invention is intended to improve the state of the art. A particular aim of the present invention is to provide an enhanced connection between the lawn mower and a user terminal like a smart phone, tablet or any other user device, such a connection being used for e.g. controlling the mower, changing the setup of the mower like the schedule of mowing times, or more generally exchanging information between the two entities.

The invention is particularly directed to an autonomous lawn mower using local network for communication. In particular, a scenario of the present invention consists in connecting a smart phone or other similar terminal of the user with the autonomous lawn mower so as to control the mower and change its setup.

Thereby, it is proposed to connect the smart phone to a home network like wireless LAN, and to connect the autonomous lawn mower to the home network. As a result it is possible for the smart phone and the autonomous lawn mower to communicate via the home network.

A home network or home area network (HAN) is a type of local area network for digital devices present inside or within the close vicinity of a home.

This configuration is advantageous over a communication system based on a cellular network since through the use of the home network based on a wireless LAN, the communication will not be slow in the area of the home network. In view of the fact that a home network typically has Internet access, the smart phone connected can communicate with the autonomous lawn mower and at the same time connect to the Internet.

It is also proposed that the mower docking station is connected via Ethernet and acts as additional wireless LAN host, and/or that the mower docking station located near house acts as wireless LAN repeater. Every communication is thereby done via a secure, preferably encrypted, communication.

Advantageously, the coverage of the home network can be extended, and the communication is secure such that communication privacy can be ensured.

The present invention and the above-mentioned advantages are realized by a system, an autonomous lawn mower, a docking station and methods according to the independent claims of this invention. The dependent claims further develop the core idea of the invention, and realize further advantages.

According to a first aspect of the invention a system is proposed for supporting a communication between network entities. The system comprises a home network, an autonomous robot, such as an autonomous lawn mower, and a user terminal. The autonomous robot and the user terminal are both adapted to connect to the home network via a respective preferably at least partially wireless link. They are adapted to exchange information with each other over the home network via said respective link.

According to a further aspect of the invention an autonomous robot is proposed, such as an autonomous lawn mower, that is adapted to connect to a home network via a preferably at least partially wireless link. It is also adapted to exchange information with a user terminal connected to the home network via said link.

According to a further aspect of the invention a docking station for an autonomous robot is proposed. The docking station preferably comprises means for charging the autonomous robot. The docking station is connected to a home network by means of a communication link for extending the home network.

According to a further aspect of the invention a method is proposed for communicating between an autonomous robot and a user terminal over a home network. The autonomous robot and the user terminal are both connected to the home network. Information is exchanged between the autonomous robot and the user terminal via the home network.

According to a further aspect of the invention a method is proposed for establishing a communication link between an autonomous robot and a user terminal over a home network. The autonomous robot and the user terminal both connect to the home network, such that information can be exchanged between the autonomous robot and the user terminal via the home network.

Advantageously, the home network is a wireless network, preferably a wireless LAN, operated in the infrastructure mode, and comprises a wireless access point as a base station for the home network.

Advantageously, the autonomous robot is connected to the wireless access point by means of a wireless link.

Advantageously, a docking station for the autonomous robot is provided, wherein the docking station preferably comprises means for charging the autonomous robot. Advantageously, the docking station is connected to the wireless access point by means of an internal communication link for extending the home network. Advantageously, the docking station is connected to the wireless access point by means of an internal wired link, such as an Ethernet link, for extending the home network. The internal wired link represents in this case the internal communication link.

Advantageously, the docking station is connected to the wireless access point by means of an internal wireless link, such as a wireless point-to-point link, for extending the home network. The internal wireless link represents in this case the internal communication link.

Advantageously, an additional wireless access point is comprised in the docking station for establishing a wireless link between the autonomous robot and the docking station, such that the autonomous robot is connectable by means of the wireless link and the internal wired link to the wireless access point of the home network and to the user terminal.

Thereby, the additional wireless access point comprised in the docking station represents the base station defining the additional wireless network. The autonomous robot located within the coverage range of this additional wireless network is enabled to establish a wireless connection to this additional wireless access point of the additional wireless network.

Advantageously, the docking station acts as a base station for an additional wireless network that is preferably a wireless LAN.

Advantageously, the docking station comprises a repeater for extending the home network, such that preferably the autonomous robot is connectable to the wireless access point via said repeater.

Advantageously, the autonomous robot comprises a repeater for extending the home network.

Advantageously, the autonomous robot comprises means, preferably driving means, to change its position, and is adapted to position itself so as to improve a communication between the autonomous robot and the user terminal or between the autonomous robot and the wireless access point.

Advantageously, the wireless access point of the home network is connected to an external network, such as the Internet, by means of an external link being preferably a wired external link.

Advantageously, the user terminal is connected to the wireless access point by means of a wireless link.

Advantageously, the user terminal, such as a laptop or a fixed device like a personal computer, is connected to the wireless access point by means of a wired link, such as an Ethernet link. In other words, the home network or wireless LAN may also have wired connections, to e.g. a laptop or a fixed device.

Advantageously, the user terminal is connected to the wireless access point by means of the external network.

Advantageously, each wireless communication within the home network is secured by e.g. encryption.

Advantageously, the autonomous robot is a gardening tool like a lawn mower or a fertilizing robot, or a cleaning robot like a vacuum cleaner or washing, waxing, polishing or shampooing robot.

To summarize, the invention proposes that the autonomous robot or autonomous lawn mower connects to the home network of the user, and the user connects to the home network e.g. with a smart phone or similar mobile device, or with a personal computer or similar fixed device. Both entities then communicate e.g. with each other over the home network.

The mower docking station can extend home network by connecting to the home network via Ethernet and the lawn mower connects to home network via connecting to the docking station via wireless LAN. Also the mower docking station can extend the home network by repeating (wireless LAN) the home network and the mower connects to home network via wireless LAN.

The mower further can extend the home network by repeating (wireless LAN) the home network, allowing the user to have home network access also in large garden areas. At the same time the mower is also a client of the network so that the user can still communicate with the mower. The mower positions itself autonomously to optimize the communication with the user.

The user can connect to the home network from a remote location, e.g. from work place or holiday location. The invention also supports secure communication with e.g. encryption technology. The invention is directed to an autonomous lawn mower but also to other autonomous robots including gardening tools.

In the following, the present invention will be explained in detail with reference to the attached drawings.
Fig. 1 schematically illustrates an embodiment of the present invention with an autonomous robot and a user terminal in a wireless LAN,
Fig. 2 schematically illustrates a further embodiment of the present invention with an external network,
Figs. 3 and 4 schematically illustrate further embodiments of the present invention with a docking station extending the wireless LAN,
Fig. 5 schematically illustrates a further embodiment of the present invention an autonomous robot extending the wireless LAN,
Fig. 6 schematically illustrates a further embodiment of the present invention with a user terminal outside of the wireless network.

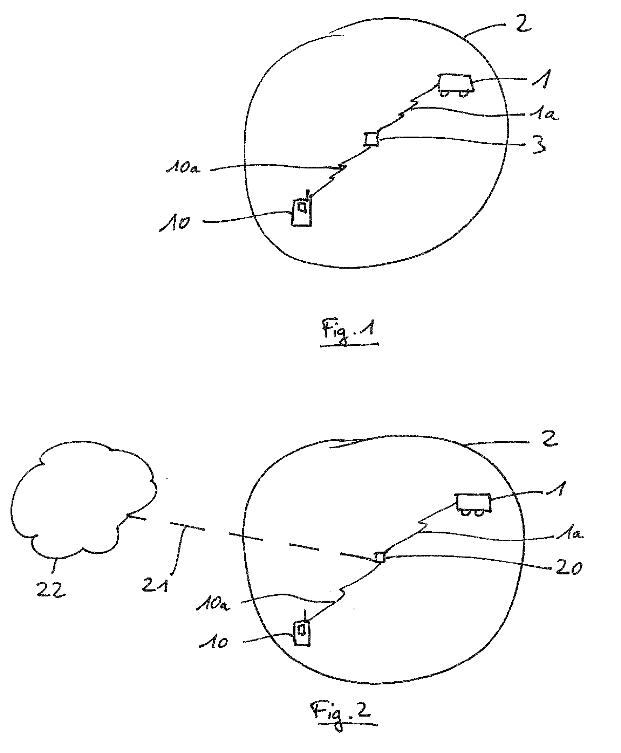

Fig. 1 shows an embodiment of the architecture of the present invention for supporting communication between an autonomous robot such as an autonomous lawn mower 1 and a user terminal 10.

A wireless local area network (wireless LAN) 2 is used to link wirelessly the lawn mower 1 and the user terminal 10. The wireless LAN 2 may be based on any appropriate standard, but preferably on one of the dedicated IEEE-802.11 standards, and may use an appropriate modulation method like e.g. OFDM.

Wireless LANs may be generally deployed according to an ad hoc mode and/or an infrastructure mode. While in the ad hoc mode two terminals connect with each other and transmit information directly from one to the other terminal without the need of pre-existing infrastructure, the embodiment of Fig. 1 presents a wireless network in the infrastructure mode.

The wireless LAN 2 accordingly comprises a wireless access point 3 that serves as a base station and to which terminals shall register in order to have access to the wireless LAN 2. The wireless access point 3 is responsible e.g. for authentication, channel allocation and security within the network, and represents the interface through which terminals can have access to the network. The lawn mower 1 and the user terminal 10 are wireless clients of the wireless access point 3.

Fig. 1 shows the use of a wireless LAN 2. Generally, the invention relates to the use of a home network or home area network (HAN), one advantageous example of such a home network being the wireless LAN 2. A home network is thereby a type of local area network particularly aimed at facilitating communication and interoperability among digital devices present inside or within the close vicinity of a home, i.e. present in a limited area of a residence or building.

Advantageously, the user terminal 10 is a mobile or handheld terminal such as a smart phone, a tablet computer, a laptop, a personal digital assistant or another mobile device. Alternatively, the user terminal 10 may also be a fixed device, such as a personal computer, a desktop or a workstation, that is equipped with a wireless network interface for enabling wireless communication.

The autonomous lawn mower 1 is only one example of an autonomous robot of the present invention. Such an autonomous robot generally refers to an unmanned mobile robot having an autonomous drive unit in order to move the robot ("self-driving mower"), an onboard energy reservoir to power the drive unit, one or more sensors and a control unit for controlling the robot. The autonomous robot performs repetitive operations or tasks over a defined work area, and can thus also refer to an autonomous floor maintenance device like vacuum cleaner or an appliance for washing, waxing or polishing. The robot can also comprise means for e.g. shampooing a carpet, for painting surfaces, or can be a gardening tool for e.g. fertilizing cultivation.

Preferably, a communication between the autonomous lawn mower 1 and the user terminal 10 that are comprised within the wireless LAN 2 is established via the wireless access point 3. The autonomous lawn mower 1 and the user terminal 10 both comprise means for establishing a connection to the wireless access point 3 and to the wireless LAN 2, and means for transmitting and/or receiving information from said wireless access point 3. These means are known in the art and particularly comprise a wireless interface and e.g. a coding/decoding unit.

The connection established between the wireless access point 3 and respectively the lawn mower 1 and the user terminal 10 is a respective wireless link 1a, 10a. The link 1a, 10a represents a communication link or data link being for the purpose of transmitting and receiving digital information according to a dedicated link protocol. In the embodiment of Fig. 1, the lawn mower 1 and the user terminal 10 are both directly connected, i.e. without any further intermediate node, to the wireless access point 3 via the respective wireless link 1a, 10a.

Once the lawn mower 1 and the user terminal 10 are connected to the wireless access point 3, they can start exchanging information. When the wireless LAN 2 has authenticated and registered both entities 1, 10, messages transmitted between these two entities are first sent from the first entity to the wireless access point 3 that in turn forwards the message to the second entity.

Fig. 2 shows a further embodiment of the present invention. The architecture shown in Fig. 2 differs from that of Fig. 1 in that the wireless access point 20 is connected by a preferably external link 21 to an external network 22. The term "external" is hereby used with reference to the wireless LAN or home network 2 and to the communication path between the lawn mower 1 and the user terminal 10.

The preferably wired link 21 e.g. can consist in a connection based on the Ethernet standard. More generally, the external link 21 can use a telephone line, a cable, fibre optics or even a further wireless link to establish a communication to the external network 22. The external network 22 can be e.g. the Internet, a Metropolitan area network (MAN), or a Wide area network (WAN).

Preferably, the external network 22 is the Internet. As such, the system allows the lawn mower 1 and the user terminal 10 to have access to the different services proposed by the Internet like the World Wide Web, the communication possibilities of emails or Internet telephony, or the transfer of data. It is then possible particularly for the user terminal 10 to receive resources from the World Wide Web, or send and receive email messages. In this configuration, also the lawn mower 1 may use the infrastructure to communicate with the user terminal 10 and to send and/or receive data or commands over the Internet.

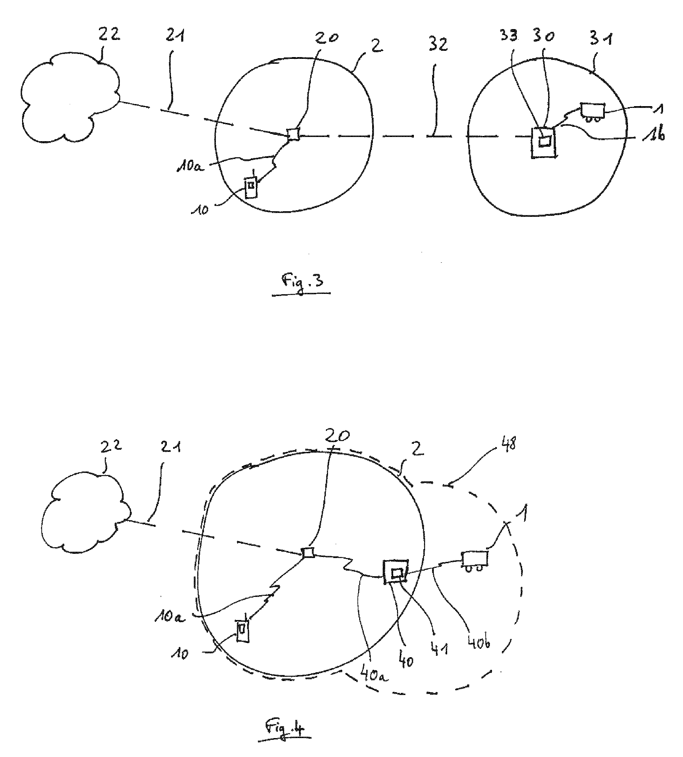

Fig. 3 shows a further embodiment of the invention in which a docking station 30 for the lawn mower 1 is part of the communication system and enhances the communication possibilities offered by the wireless access point 20.

Within the mowing area delimited e.g. by an electric border wire that emits a weak electromagnetic field, a charging station or docking station 30 for the mower may be present. The autonomous lawn mower 1 usually comprises a rechargeable battery that can be recharged by a charging module of such docking station 30. The docking station is e.g. connected to mains current and/or comprises solar panels to transfer electric power to the lawn mower 1 by means of e.g. inductive coupling. The docking station 30 is typically in a fixed position known by the lawn mower 1 within the mowing area. With the knowledge of this position, the lawn mower 1 is advantageously able to move to the docking station 30 without any external command.

The system shown in Fig. 3 comprises the wireless LAN 2 of Fig. 2 with the wireless access point 20. Alternatively, the system could also comprise the wireless access point 3 of Fig. 1 that is not connected to the external network 22.

According to embodiments of the present invention, the docking station 30 for the autonomous robot is adapted to establish a connection to the wireless access point 3, 20 by means of an internal communication link for extending the wireless LAN or home network 2. This internal communication link is e.g. a point-to-point link between the docking station 30 and the wireless access point 3, 20.

The wording "internal" thereby refers to the fact that the internal communication link is comprised within the system for supporting communication between the autonomous lawn mower 1 and the user terminal 10, i.e. the internal communication link is comprised in the communication path between said two entities.

In the embodiment of Fig. 3, this internal communication link is an internal wired link 32. An example of such an internal wired link 32 is an Ethernet link. Alternative to the embodiment of Fig. 3, the internal communication link between the docking station 30 and the wireless access point 3, 20 can be a wireless link, such as e.g. a wireless point-to-point link.

The docking station 30 thereby comprises an additional wireless access point 33 that defines an additional wireless LAN 31 around said docking station 30. The lawn mower 1 can thus still be connected to the wireless access point 20 and to the corresponding wireless LAN 2, even if it leaves the coverage area of said wireless LAN 2.

An advantage of the configuration of Fig. 3 is that the lawn mower 1 is adapted to establish a connection to the wireless access point 20 in two different ways, i.e. either directly by means of the wireless link 1a, or indirectly via the internal wired link 32.

According to this indirect way, the lawn mower 1 establishes a wireless link 1b to the additional wireless access point 33 of the additional wireless LAN 31. The additional wireless access point 33 is thereby connected within the docking station 30 to the internal wired link 32. In this way, the lawn mower 1 is connected to the wireless LAN 2. In case the user terminal is located within this wireless LAN 2, the communication path between lawn mower 1 and user terminal 10 can thus consist in the wireless link 1b, the internal wired link 32 and the wireless link 10a.

Fig. 4 shows an alternative embodiment to that of Fig. 3 in that the docking station 40 does not comprise the additional wireless access point 33, but rather a repeater 41. The repeater is adapted to amplify wireless signals received within the wireless LAN 2. In other words, the repeater 41 receives a signal and retransmits it at a higher level or power so that the signal can cover longer distances. The reference 40a represents the wireless link between the repeater 41 and the wireless access point 20, and reference 40b the wireless link between the repeater 41 and the lawn mower 1. A communication path between the lawn mower 1 and the user terminal 10 can then consist in the wireless link 40b, the wireless link 40a and the wireless link 10a.

An advantage over the embodiment of Fig. 2 is thus the expansion of the wireless LAN 2 over a larger distance. The lawn mower 1 that is outside of the direct coverage by the wireless access point 3 can thus still be connected to the wireless LAN 2.

While the docking station 30 of Fig. 3 extends the wireless LAN or home network 2 by means of the additional wireless access point 33, the docking station 40 of Fig. 4 extends it by means of the repeater 41. Thereby, the extended coverage of the wireless LAN 2 achieved by means of the repeater 41 is schematically represented in Fig. 4 by a dashed line 48.

These embodiments of extending the coverage of the wireless LAN 2 by means of the docking station are particularly advantageous, since usually the lawn mower 1 is much closer to the docking station 30, 40 than to the wireless access point 20. The former is indeed preferably located within the mowing area of the mower, while the latter is usually installed within a residence or more generally within a building.

One advantage of the additional wireless access point 33 over the repeater 41 is that the docking station is not required to be in the vicinity of, i.e. in the coverage area of the wireless LAN 2. On the other hand, one advantage of the repeater 41 is the simplicity of implementation since no internal wired link 32 is required and since, in general, a repeater has a lower complexity than a wireless access point.

According to a further embodiment, the docking station comprises both the additional wireless access point 33 shown in Fig. 3 and the repeater 41 shown in Fig. 4. Thereby, a single device of the docking station can incorporate the functionalities of both the additional wireless access point 33 and the repeater 41. Such device could advantageously comprise a selection means like a switch, so that a user can select the desired functionality.

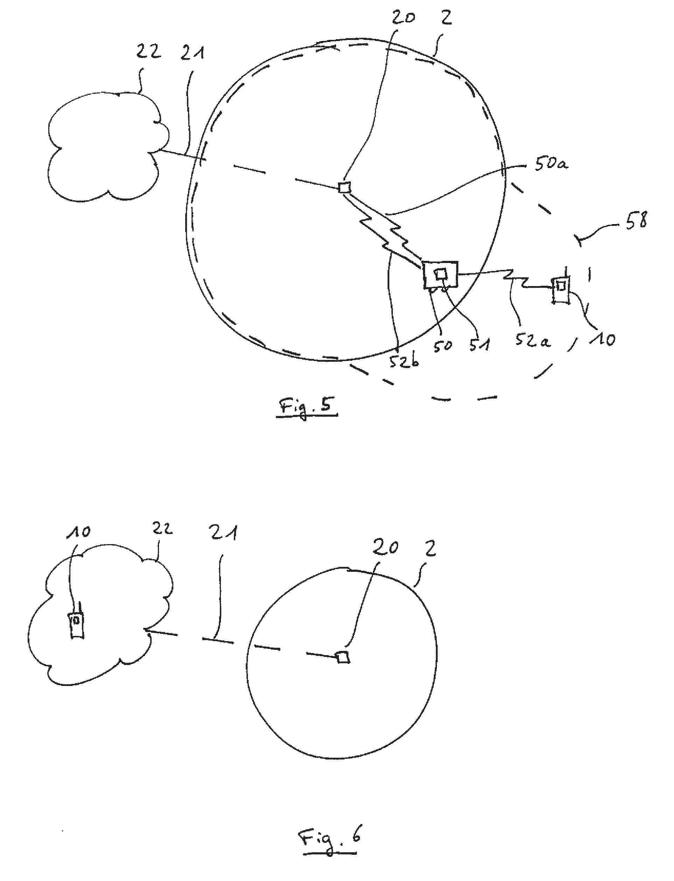

Fig. 5 shows a further embodiment, wherein the autonomous lawn mower 50 comprises a repeater 51. This embodiment can be combined with the above embodiments.

The lawn mower 50 in this case repeats the wireless LAN or home network 2 beyond the coverage of the wireless access point 20. Thereby, the extended coverage of the wireless LAN 2 achieved by means of the repeater 51 is schematically represented in Fig. 5 by a dashed line 58.

In this configuration it is possible for the user terminal 10 to have access to the wireless LAN 2 and preferably also to the external network 22 like Internet. Reference 52a represents the wireless link between the user terminal 10 and the lawn mower 50, and reference 52b the wireless link between the lawn mower 50 and the wireless access point 20.

The user terminal 10 thus can establish a communication with the wireless LAN 2 via these wireless links 52a, 52b, and can establish a communication with the external network 22 via these wireless links 52a, 52b and the external wired link 21.

It is thereby advantageous that the lawn mower 50 not only repeats the wireless LAN 2, but also remains client of the wireless LAN 2 via a dedicated communication link 50a, so that also the lawn mower 50 is able to exchange information and communicate with the wireless LAN 2, and possibly with the external network 22 via the external wired link 21.

The embodiment of Fig. 5 is preferably combined with the system of Fig. 3 and/or Fig. 4, such that on the one hand the autonomous lawn mower 50 comprises a repeater 51 and on the other hand the docking station 30, 40 comprises an additional wireless access point 33 and/or a repeater 41. As such, the user terminal 10 has access to the home network 2 in even a larger area.

According to a further embodiment, the lawn mower 1 comprises means, preferably driving means, to change its position. The lawn mower 1 is thereby adapted to change its position so as to improve the quality of the communication between the lawn mower 1 and the wireless access point 3, 20, and/or between the lawn mower 1 and the user terminal 10. In other words, it can be adapted to position itself so as to improve a communication with the user terminal 10.

Thereby, the lawn mower comprises means for evaluating the quality of the signal received from the wireless access point 3, 20. This refers e.g. to the signal received directly from the wireless access point via the wireless link 1a of Fig. 1 or 2, or via the wireless link 52b of Fig. 5. The received signal can also refer to the signal received indirectly from the wireless access point via the docking station 30, 40 by means of the wireless link 1b of Fig. 3 or by means of the wireless link 40b of Fig. 4.

The lawn mower can try to improve the quality of the received signal, e.g. the power of the received signal, by changing its position and measuring the quality of the received signal, e.g. the signal power or the interference level, at different positions. After this measurement step, the lawn mower moves to the position giving the best signal quality.

Alternatively or in addition thereto, the lawn mower can also measure the quality of the signal received from the user terminal over the link 52a in Fig. 5, and choose a position so as to improve the quality of the signal transmission between the mower 50 and the user terminal 10.

Fig. 6 shows an alternative embodiment in that the user 10 is connected to the wireless access point 20 by means of the external network 22. This embodiment is advantageous in that a communication between the user terminal 10 and the lawn mower 1 can take place even if the user terminal 10 is not present in the wireless LAN 2. The user can then connect to the wireless LAN and the lawn mower from a remote location, e.g. from a work place or a holiday location. The embodiment of Fig. 6 can be combined with any of the above mentioned embodiment.

## Claims

1. System for supporting a communication between network entities, comprising:
- a home network (2),
- an autonomous robot (1), such as an autonomous lawn mower, and
- a user terminal (10),
wherein the autonomous robot (1) and the user terminal (10) are both adapted to connect to the home network (2) via a respective preferably at least partially wireless link (1a, 10a), and to exchange information with each other over the home network (2) via said respective link (1a, 10a).

2. System according to claim 1,
wherein the home network (2) is a wireless network, preferably a wireless LAN, operated in the infrastructure mode, and comprises a wireless access point (3, 20) as a base station for the home network (2).

3. System according to claim 2,
wherein the autonomous robot (1) is connected to the wireless access point (3, 20) by means of a wireless link (1a).

4. System according to claim 2,
comprising a docking station (30, 40) for the autonomous robot (1), wherein the docking station (30, 40) preferably comprises means for charging the autonomous robot (1), wherein the docking station (30, 40) is connected to the wireless access point (3, 20) by means of an internal communication link (32) for extending the home network (2).

5. System according to claim 4,
wherein the docking station (30) is connected to the wireless access point (3, 20) by means of an internal wired link (32), such as an Ethernet link, for extending the home network (2).

6. System according to claim 4,
wherein the docking station (30) is connected to the wireless access point (3, 20) by means of an internal wireless link, such as a wireless point-to-point link, for extending the home network (2).

7. System according to claim 4 or 6,
wherein an additional wireless access point (33) is comprised in the docking station (30) for establishing a wireless link (1b) between the autonomous robot (1) and the docking station (30), such that the autonomous robot is connectable by means of the wireless link (1b) and the internal communication link (32) to the wireless access point (20) of the home network (2) and to the user terminal (10).

8. System according to any of the claims 4 to 7,
wherein the docking station (30) acts as a base station for an additional wireless network (31) that is preferably a wireless LAN.

9. System according to any of the claims 4 to 8,
wherein the docking station (40) comprises a repeater (41) for extending the home network (2), such that preferably the autonomous robot (1) is connectable to the wireless access point (3, 20) via said repeater (41).

10. System according to any of the claims 2 to 9,
wherein the autonomous robot (50) comprises a repeater (51) for extending the home network (2).

11. System to any of the preceding claims,
wherein the autonomous robot comprises means, preferably driving means, to change its position, and is adapted to position itself so as to improve a communication between the autonomous robot (1) and the user terminal (10) or between the autonomous robot (1) and the wireless access point (3, 20).

12. System according to any of the claims 2 to 11, wherein the wireless access point (20) of the home network (2) is connected to an external network (22), such as the Internet, by means of an external link (21) being preferably a wired external link.

13. System according to any of the claims 2 to 12, wherein the user terminal (10) is connected to the wireless access point (20) by means of a wireless link (10a).

14. System according to any of the claims 2 to 12, wherein the user terminal (10), such as a laptop or a fixed device like a personal computer, is connected to the wireless access point (20) by means of a wired link, such as an Ethernet link.

15. System according to any of the claims 2 to 12, wherein the user terminal (10) is connected to the wireless access point (20) by means of the external network (22).

16. System according to any of the claims 2 to 15, wherein each wireless communication within the home network (2) is secured by e.g. encryption.

17. System according to any of the preceding claims, wherein the autonomous robot (1) is a gardening tool like a lawn mower or a fertilizing robot, or a cleaning robot like a vacuum cleaner or washing, waxing, polishing or shampooing robot.

18. Autonomous robot (1), such as an autonomous lawn mower, that is adapted to connect to a home network (2) via a preferably at least partially wireless link (1a), and to exchange information with a user terminal (10) connected to the home network (2) via said link (1a).

19. Docking station (30, 40) for an autonomous robot (1), wherein the docking station (30, 40) preferably comprises means for charging the autonomous robot (1),
wherein the docking station (30, 40) is connected to a home network (2) by means of an communication link (32, 40a) for extending the home network (2).

20. Method for communicating between an autonomous robot (1) and a user terminal (10) over a home network (2), wherein the autonomous robot (1) and the user terminal (10) are both connected to the home network (2), and information is exchanged between the autonomous robot (1) and the user terminal (10) via the home network (2).

21. Method for establishing a communication link between an autonomous robot (1) and a user terminal (10) over a home network (2),
wherein the autonomous robot (1) and the user terminal (10) both connect to the home network (2), such that information can be exchanged between the autonomous robot (1) and the user terminal (10) via the home network (2).

## Amended claims

### Amended claims in accordance with Rule 137(2) EPC.

1. System for supporting a communication between network entities, comprising:
- a network (2),
- an autonomous robot (1), such as an autonomous lawn mower, and
- a user terminal (10),
wherein the autonomous robot (1) and the user terminal (10) are both adapted to connect to the network (2) via a respective preferably at least partially wireless link (la, 10a), and to exchange information with each other over the network (2) via said respective link (la, 10a), and
wherein the network (2) is a wireless network, preferably a wireless LAN, configured to operate in the infrastructure mode, and comprises a wireless access point (3, 20) as a base station for the network (2), **characterized in that**
the autonomous robot (50) comprises a repeater (51) for extending the network (2).

2. System according to claim 1,
wherein the autonomous robot (1) is connected to the wireless access point (3, 20) by means of a wireless link (1a).

3. System according to claim 1,
comprising a docking station (30, 40) for the autonomous robot (1), wherein the docking station (30, 40) preferably comprises means for charging the autonomous robot (1), wherein the docking station (30, 40) is connected to the wireless access point (3, 20) by means of a communication link (32) for extending the network (2).

4. System according to claim 3,
wherein the docking station (30) is connected to the wireless access point (3, 20) by means of a wired link (32), such as an Ethernet link, for extending the network (2).

5. System according to claim 3,
wherein the docking station (30) is connected to the wireless access point (3, 20) by means of a wireless link, such as a wireless point-to-point link, for extending the network (2).

6. System according to claim 3 or 5,
wherein an additional wireless access point (33) is comprised in the docking station (30) for establishing a wireless link (1b) between the autonomous robot (1) and the docking station (30), such that the autonomous robot is connectable by means of the wireless link (1b) and the communication link (32) to the wireless access point (20) of the network (2) and to the user terminal (10).

7. System according to any of the claims 3 to 6,
wherein the docking station (30) acts as a base station for an additional wireless network (31) that is preferably a wireless LAN.

8. System according to any of the claims 3 to 7,
wherein the docking station (40) comprises a repeater (41) for extending the network (2), such that preferably the autonomous robot (1) is connectable to the wireless access point (3, 20) via said repeater (41).

9. System to any of the preceding claims,
wherein the autonomous robot (1) comprises means, preferably driving means, to change its position, and is adapted to position itself so as to improve a communication between the autonomous robot (1) and the user terminal (10) or between the autonomous robot (1) and the wireless access point (3, 20).

10. System according to any of the claims 1 to 9,
wherein the wireless access point (20) of the network (2) is connected to an external network (22), such as the Internet, by means of an external link (21) being preferably a wired external link.

11. System according to any of the claims 1 to 10,
wherein the user terminal (10) is connected to the wireless access point (20) by means of a wireless link (10a).

12. System according to any of the claims 1 to 10,
wherein the user terminal (10), such as a laptop or a fixed device like a personal computer, is connected to the wireless access point (20) by means of a wired link, such as an Ethernet link.

13. System according to any of the claims 1 to 10,
wherein the user terminal (10) is connected to the wireless access point (20) by means of the external network (22).

14. System according to any of the claims 1 to 13,
wherein each wireless communication within the network (2) is secured by e.g. encryption.

15. System according to any of the preceding claims,
wherein the autonomous robot (1) is a gardening tool like a lawn mower or a fertilizing robot, or a cleaning robot like a vacuum cleaner or washing, waxing, polishing or shampooing robot.

16. Autonomous robot (1), such as an autonomous lawn mower, that is adapted to connect to a network (2) by means of a preferably at least partially wireless link (1a), and to exchange information with a user terminal (10) connected to the home network (2) by means of said link (1a), wherein the network (2) is a wireless network, preferably a wireless LAN, configured to operate in the infrastructure mode, and comprises a wireless access point (3, 20) as a base station for the network (2),
**characterized in that**
the autonomous robot (50) comprises a repeater (51) for extending the network (2).

17. Method for communicating between an autonomous robot (1) and a user terminal (10) over a network (2),
wherein the autonomous robot (1) and the user terminal (10) are both connected to the network (2), and information is exchanged between the autonomous robot (1) and the user terminal (10) via the home network (2), wherein the network (2) is a wireless network, preferably a wireless LAN, configured to operate in the infrastructure mode, and comprises a wireless access point (3, 20) as a base station for the network (2),
**characterized in that**
the autonomous robot (50) comprises a repeater (51) and the method further comprises the step of extending the network (2) by the repeater (51).

18. Method for establishing a communication link between an autonomous robot (1) and a user terminal (10) over a home network (2),
wherein the autonomous robot (1) and the user terminal (10) both connect to the network (2), such that information can be exchanged between the autonomous robot (1) and the user terminal (10) via the network (2) wherein the network (2) is a wireless network, preferably a wireless LAN, configured to operate in the infrastructure mode, and comprises a wireless access point (3, 20) as a base station for the network (2),
**characterized in that**
the autonomous robot (50) comprises a repeater (51) and the method further comprises the step of extending the network (2) by the repeater (51).
